# EUROPÄISCHE PATENTSCHRIFT

(11) **EP 3 552 777 B1**
(45) Veröffentlichungstag und Bekanntmachung des Hinweises auf die Patenterteilung: **17.03.2021**
(21) Anmeldenummer: 19168071.9
(22) Anmeldetag: 09.04.2019
(51) Int. Cl.: B25J 9/16

(54) **VERFAHREN ZUR BEWEGUNGSSTEUERUNG EINES EIN WERKSTÜCK HALTENDEN MANIPULATORS**
METHOD FOR CONTROLLING THE MOTION OF A MANIPULATOR HOLDING A WORKPIECE
PROCÉDÉ DE COMMANDE DU MOUVEMENT D'UN MANIPULATEUR TENANT UNE PIÈCE À USINER

(30) Priorität: 11.04.2018 AT 503072018
(43) Veröffentlichungstag der Anmeldung: 16.10.2019
(73) Patentinhaber: TRUMPF Maschinen Austria GmbH & Co. KG., 4061 Pasching (AT)
(72) Erfinder: DENKMEIER, Thomas, 4050 Traun (AT)
(74) Vertreter: Burger, Hannes

(56) Entgegenhaltungen:
- EP-A1- 2 741 065
- EP-A1- 3 189 947
- WO-A1-2013/026497
- DE-A1-102010 052 396

## Beschreibung

Die Erfindung betrifft ein Verfahren zur Steuerung einer sicheren Bewegung eines Werkstückes, bevorzugt eines Blechteils, in einem Bearbeitungsraum einer Biegemaschine.

Moderne Handhabungsmaschinen, wie etwa Roboter, können als mehrachsig bewegliche Manipulatoren bezeichnet werden. Die Überwachung von Achsbewegungen derartiger Manipulatoren wird erforderlich, sobald auf Schutzzäune zur Umgrenzung eines Bearbeitungs- bzw. Gefahrenbereiches verzichtet werden soll. Schutzzäune dienen in erster Linie dazu, Personen vor gefahrbringenden Achsbewegungen des Manipulators oder aber auch unbeabsichtigt wegfliegenden Werkstücken zu schützen. Zum Schutz von Personen in einem schutzzaunlosen Bearbeitungsbereich sind dem Fachmann eine Reihe von Verfahren bekannt.

Beispielhaft sei an dieser Stelle die DE 10361132 B4 erwähnt. Hierin wird ein Verfahren zur Überwachung der Bewegung eines sich in mehreren Freiheitsgraden bewegenden gefahrbringenden Objektes vorgestellt, wobei ein Bremsweg des gefahrbringenden Objektes so minimal wie möglich gehalten wird, um Stoß- und Quetschgefahren zwischen gefährdeten Objekten und dem gefahrbringenden Objekt zu reduzieren.

Die WO 2013/026497 A1 offenbart ein Verfahren zur Dimensionierung eines Schutzzauns um einen Roboter, welcher ein Werkstück mittels eines Haltewerkzeugs hält und das Werkstück im Bearbeitungsraum bewegt. Der Schutzzaun wird so dimensioniert, dass bei Werkstückverlust dieses vom Schutzzaun sicher aufgehalten wird. Dazu erfolgt eine dynamische Berechnung einer Bewegungsbahn des Werkstücks und eine Ermittlung eines Auftreffpunkts des Werkstücks.

In EP 3 189 947 A1 ist ein Verfahren zum Überwachen eines Arbeitsraums eines Roboters mittels einer Überwachungseinrichtung offenbart, wobei ein Schutzraum um den Arbeitsraum virtuell erstellt wird und dieser überwacht wird.

Die DE 10 2010 052396 A1 schlägt ein Verfahren zur Reduktion des Energieverbrauchs eines Roboters, der ein Werkstück mittels eines Greifers oder Magneten hält. Die Haltekraft wird fortlaufend entsprechend der aktuellen Bewegung des Roboters berechnet und derart angepasst, dass das Werkstück sicher gehalten wird und ein Werkstückverlust vermieden wird.

Bei der Bewegung eines Werkstücks, bevorzugt eines Blechteils, in einem Bearbeitungsraum wird das Werkstück üblicherweise von einem Haltewerkzeug unter Aufbringung einer Haltekraft auf zumindest eine Werkstückoberfläche gehalten. Um eine sichere translatorische und/oder rotatorische Bewegung des Werkstücks zu ermöglichen, ist eine genaue Kenntnis der Reibbedingungen zwischen dem Haltewerkzeug und dem zu bewegenden Werkstück erforderlich. Ein Risiko stellt hierbei eine undefinierte Reibkraft zwischen dem Haltewerkzeug und dem Werkstück dar. Die Unsicherheit bei der Bestimmung der Reibkräfte kann als mögliche Ursachen haben, dass die Werkstückoberfläche durch eine reibungsmindernde Verunreinigung, wie etwa Öl oder auch ein Korrosionsschutz, verschmutzt ist. Ebenso ist es möglich, dass ein Verschleiß des Reibbelages oder auch Fremdmaterial in den Rauheitstälern eines Reibbelages zu undefinierten Reibbedingungen führt. Ferner kann sich die Werkstückschwerpunktlage eines Werkstücks, insbesondere hierbei eines Blechteils, im Zuge nacheinander erfolgender Umformschritte verändern. Dies kann unter Umständen bei Auslösung einer Kollisionswarnung innerhalb der Anlagensteuerung einen kontrollierten Bremsvorgang bis zu einem Anlagenstillstand behindern oder sogar unmöglich machen. Im Grenzfall führt dies im Zusammenspiel mit undefinierten Reibbedingungen zu einem Werkstückverlust des Werkstücks aus dem Haltewerkzeug.

Aufgabe der vorliegenden Erfindung war es, die Nachteile des Standes der Technik zu überwinden und ein Verfahren zur Verfügung zu stellen, mittels derer eine einfache und sichere Steuerung der Bewegung eines Werkstücks vorzunehmen und im Grenzfall einen kontrollierten Werkstückverlust herbeizuführen.

Erfindungsgemäß wird ein Haltewerkzeug, welches an einen mehrachsig beweglichen Manipulator angeordnet ist, derart bewegt, dass undefinierte und somit unsichere Reibbedingungen bzw. Reibkräfte zwischen einem Haltewerkzeug und einem Werkstück eine Gefahr bezüglich eines herausgeschleuderten Werkstücks reduzieren. Es wird dabei die Bewegung des Haltewerkzeugs so optimiert, dass ein Herausschleudern des Werkstücks, insbesondere eines Blechs, durch Trägheitskräfte vermieden wird und im Grenzfall bei einem auftretenden Werkstückverlust durch das Haltewerkzeug ein Auftreffpunkt innerhalb des Gefahrenbereiches liegt.

Das erfindungsgemäße Verfahren zur Steuerung der sicheren Bewegung eines Werkstücks, bevorzugt eines Blechteils, in einem bevorzugt schutzzaunlosen Bearbeitungsraum einer Biegemaschine umfasst die folgenden Verfahrensschritte. Es erfolgt zuerst die Bereitstellung des Werkstücks, bevorzugt des Blechteils, an einer Aufnahmeposition. Dort erfolgt das Kontaktieren des Werkstücks an zumindest einer Werkstückoberfläche mittels eines Haltewerkzeugs. Das Haltewerkzeug ist dabei an einem mehrachsig beweglichen Manipulator angeordnet. Nach dem Kontaktieren wird eine Haltekraft auf die zumindest eine Werkstückoberfläche aufgebracht. Die Bewegung des Werkstücks zu einer vorgebbaren Bestimmungsposition oder auch einer Ablageposition kann durch translatorische und/oder eine rotatorische Bewegung des Werkstücks erfolgen. Dies kann auch eine Manipulation des Werkstücks innerhalb einer Bearbeitungsmaschine sein. Erfindungsgemäß erfolgt beim Kontaktieren des Werkstücks, oder bereits zuvor, eine Ermittlung des Werkstückschwerpunkts. Weiters erfolgt die Berechnung einer Hüllkugel, welche durch den ermittelten Werkstückschwerpunkt und einen Radius zum weitest entfernten Punkt des Werkstücks definiert ist. Danach erfolgt fortlaufend bzw. dynamisch eine Berechnung eines etwaigen Auftreffpunktes des Werkstücks bei einem Werkstückverlust durch das Haltewerkzeug. Diese Berechnung erfolgt zumindest während der Bewegung des Werkstücks dynamisch und kann demnach fortlaufend in vorgebbaren, bevorzugt kleinen, Zeitabständen wiederholt werden. Der Auftreffpunkt ist vom Haltewerkzeug bei Werkstückverlust durch eine Wurfbahn entfernt. Die Wurfbahn folgt dabei im Wesentlichen einer Wurfparabel. Gleichzeitig zur Berechnung des Auftreffpunktes erfolgt eine dynamische Berechnung und Steuerung einer Bewegungsbahn des Haltewerkzeugs. Die Berechnung und Steuerung des Haltewerkzeugs wird dabei derart von der Analgensteuerung vorgenommen, dass der etwaige Auftreffpunkt des Werkstücks bei Werkstückverlust innerhalb eines Gefahrenbereiches des Bearbeitungsraums erfolgt.

Die Kollisionsvermeidung von bewegten Objekten bzw. Werkstücken stellt bekanntermaßen eine Unterart der konventionellen Bahnkorrektur dar. Bei der Kollisionsvermeidung steht das Vermeiden von ungewollten Kontakten sowie Kollisionen mit statischen und dynamischen Umgebungsobjekten im Fokus. Hierbei spiel oftmals das Ziel der Prozesserfüllung eine untergeordnete Rolle. Im Gegenzug zur herkömmlichen Kollisionsvermeidung bei gehaltenen bzw. ergriffenen Objekten, findet erfindungsgemäß eine dynamische Berechnung eines möglichen oder etwaigen Auftreffpunktes des Werkstückes bei Werkstückverlust statt und die Berechnung und Steuerung der Bewegungsbahn des Haltewerkzeuges wird dementsprechend angepasst. Da sich ein Werkstück bzw. en Blech während des Fluges um den Werkstückschwerpunkt drehen kann, wird die undefinierte dreidimensionale Neigung während des Fluges bzw. am Auftreffpunkt durch die Berechnung der Hüllkugel angenähert. Auf diese Weise wird eine effiziente Erhöhung der Sicherheit selbst bei undefinierten Reibbedingungen der Werkstückoberfläche zum Haltewerkzeug ermöglicht. Dies erlaubt, dass ansonsten übliche Schutzzäune, welche einen Gefahrenbereich des Bearbeitungsraumes begrenzen, überflüssig werden können. Das erfindungsgemäße Verfahren stellt somit zur Erhöhung der Sicherheit einen kontrollierbaren Werkstückverlust eines Werkstückes dar. Es wird dabei in jedem Moment einer Bewegung des Werkstückes überprüft, ob das Werkstück innerhalb des Gefahrenbereichs auftreffen würde. Durch Kenntnis von Geschwindigkeit, Richtung und/oder Beschleunigung eines Werkstücks, durch die Kenntnis der Bewegungsbahn des Haltewerkzeugs ist eine Berechnung der Wurfbahn des Werkstücks zu jedem Zeitpunkt, also dynamisch, möglich.

Des Weiteren kann es zweckmäßig sein, dass die Ermittlung des Werkstückschwerpunkts anhand vorgebbarer Werkstückdaten aus der Anlagensteuerung erfolgt.

Auf diese Weise wird eine schnelle Erfassung des Werkstückschwerpunkts anhand vorgebbarer Lage- und/oder Werkstückinformationen ermöglicht. Speziell bei dreidimensionalen Werkstückgeometrien kann eine Schwerpunktlagebestimmung schwierig sein. Werkstückdaten, wie etwa Materialdichte, Wandstärke etc. können dabei in der Anlagensteuerung hinterlegt sein und auf diesem Wege die Werkstückschwerpunktlage vorbekannt machen, was eine Ermittlung des Werkstückschwerpunkts vor dem Kontaktieren ermöglicht.

Ferner kann vorgesehen sein, dass zumindest ein mit der Anlagensteuerung verbundenes Sensorelement zur Erfassung einer Werkstückgeometrie verwendet wird. Das Sensorelement ist dabei bevorzugt optisch ausgebildet.

Die Verwendung eines derartigen Sensorelementes kann dazu verwendet werden, bereits aus der Anlagensteuerung verfügbare Werkstückdaten mit den Ist-Werten der aktuellen Werkstückgeometrie zu vergleichen. Auf diese Weise kann zusätzlich eine Erkennung eines unter Umständen falschen Werkstückes ermöglicht werden. Ebenso erlaubt dies eine Erkennung von oberflächlichen Verunreinigungen wie etwa Schneid- oder Stanzbutzen sowie etwaige Öffnungen, welche bei Teilen mit gleicher Außengeometrie zu einer Veränderung der Lage des Werkstückschwerpunkts führen würden. Die Verwechslungsgefahr eines "falschen" Werkstücks kann somit reduziert werden. Dieses Vorgehen dient somit der Erhöhung der Sicherheit des Prozesses und der Bahnberechnung bei einem etwaigen Werkstückverlust.

Des Gleichen kann ein Abgleich der erfassten Werkstückgeometriedaten mit vorgebbaren Werkstückdaten in die Berechnung der Bewegungsbahn des Haltewerkzeugs und/oder des etwaigen Auftreffpunktes einbezogen werden.

Die Verwendung eines Sensorelementes zur Bestimmung der Werkstückgeometrie kann auf eine weitere Weise in die Berechnung der Bewegungsbahn des Haltewerkzeugs bzw. eines möglichen Auftreffpunkts einbezogen werden. Es kann dabei vorgesehen sein, dass eine optimale Kontaktposition des Haltewerkzeugs am Werkstück relativ zum Werkstückschwerpunkt zur Minimierung von trägheitsbedingten Kippmomenten des Werkstücks gegenüber dem Haltewerkzeug während der Bewegung von der Anlagensteuerung berechnet wird. Unter Kontaktposition können sowohl eine Kontaktfläche bei z.B. einem Plattengreifer, oder auch Kontaktpunkte bei z.B. einem Zangen- oder Sauggreifer verstanden werden. Bei einer ungünstig erscheinenden Kontaktposition kann die Anlagensteuerung ein "Nachfassen" und Korrigieren der Kontaktposition einleiten. Dies stellt bei Werkstückverlust die Lage des etwaigen Auftreffpunkts innerhalb des Gefahrenbereichs sicher.

Dieses "Nachfassen" des Haltewerkzeugs erlaubt die optimale Ausrichtung der Kontaktposition des Haltewerkzeugs am Werkstück. Insbesondere bei Biegemaschinen in denen das Werkstück mehrmals innerhalb des Bearbeitungsbereichs bewegt werden kann, bevor eine Bewegung zu einer Ablageposition erfolgt, kann eine Anpassung der Kontaktposition erforderlich sein, um ein ungewünschtes trägheitsbedingtes Kippmoment und im Grenzfall sogar einen Werkstückverlust zu verhindern.

Vorteilhaft ist auch eine Ausprägung gemäß welcher vorgesehen sein kann, dass etwaige ortsfeste Kollisionsobjekte im Bearbeitungsraum von der Anlagensteuerung berücksichtigt und in die Berechnung des etwaigen Auftreffpunkts und/oder der Bewegungsbahn des Haltewerkzeugs miteinbezogen werden.

Als ortsfeste Kollisionsobjekte werden hierbei sowohl die Biegemaschine selber als auch etwaige Aufgabe- und/oder Ablagepositionen berücksichtigt. Es können jedoch auch zum Beispiel Steher einer Hallenkonstruktion oder auch Versorgungsleitungen über Kopf in die Anlagensteuerung eingespeist werden, um eine vorläufig sichere Bewegungsbahn zu errechnen. Es ist sogar denkbar, dass die Anlagensteuerung eine Art Lerneffekt aufweist. Damit ist gemeint, dass bei wiederholter Bearbeitung eines gewissen Werkstücktyps korrespondierende Aufnahme- oder Ablagepositionen, zum Beispiel in Form von Paletten, von der Anlagensteuerung lediglich einmal erfasst werden müssen und bei der nächsten Bearbeitung eines derartigen Werkstücktyps bereits innerhalb der Anlagensteuerung abgespeichert sind. Die Eingabe derartiger ortsfester Kollisionsobjekte kann manuell durch einen Bediener oder auch in Form von zum Beispiel 3D-Daten erfolgen. Dies bietet den Vorteil, dass bei der dynamischen Berechnung des Auftreffpunkts und/oder der Bewegungsbahn des Haltewerkzeugs eine ungewollte Veränderung der Wurfbahn des Werkstücks bei Werkstückverlust durch Kollisionen mit einem ortsfesten Kollisionsobjekt in die Berechnungen miteinfließen kann. Hierdurch kann vermieden werden, dass es zu einem Abprallen des Werkstücks an Kollisionsobjekten kommt, wodurch die Sicherheit im Bearbeitungs- bzw. Gefahrenbereich erhöht wird.

Gemäß einer Weiterbildung ist es möglich, dass etwaige bewegliche Kollisionsobjekte im Bearbeitungsraum durch zumindest einen bevorzugt laseroptischen Umgebungssensor fortlaufend erfasst werden und in die Berechnung des etwaigen Auftreffpunkts und/oder der Bewegungsbahn des Haltewerkzeugs miteinbezogen werden.

Ein derartiger Umgebungssensor kann z.B. als Scanner zur Überwachung eines Sicherheitsbereiches verwendet werden. Der Sicherheitsbereich weist hierbei gegenüber dem Gefahrenbereich sowie dem Bearbeitungsraum einen vorgebbaren größeren Radius zum Zentrum des Manipulators auf. Derartige Umgebungssensoren, wie zum Beispiel "Safety Eye", sind dazu geeignet, bewegliche Kollisionsobjekte im Raum frühzeitig zu erfassen und der Anlagensteuerung zugänglich zu machen um dynamische Reaktionen auszulösen. Durch das frühzeitige Erkennen eines beweglichen Kollisionsobjekts, z.B. bei Betreten des Sicherheitsbereichs durch eine Person, kann zeitgerecht eine dynamische Berechnung des etwaigen Auftreffpunktes und/oder der Bewegungsbahn des Haltewerkzeugs durch die Anlagensteuerung durchgeführt werden. Hierdurch kann die Sicherheit, insbesondere in eine schutzzaunlosen Bearbeitungsraum erhöht werden.

Ferner kann es zweckmäßig sein, dass die Geschwindigkeit und/oder Bewegungsrichtung eines beweglichen Kollisionsobjektes erfasst und in die Berechnung des etwaigen Auftreffpunkts und/oder der Bahnbewegung des Haltewerkzeugs miteinbezogen werden.

Diese fortlaufende bzw. dynamische Überwachung beweglicher Kollisionsobjekte erlaubt bereits beim Eintritt in den Sicherheitsbereich, dass die Anlagensteuerung erkennt, ob eine Bahnkorrektur erforderlich ist, um eine Gefährdung des beweglichen Kollisionsobjektes durch ein Werkstück bei Werkstückverlust zu vermeiden.

Darüber hinaus kann vorgesehen sein, dass zumindest ein im Haltewerkzeug angeordneter Inertialsensor zur fortlaufenden Erfassung von räumlichen Bewegungsdaten des Haltewerkzeugs verwendet wird, welche zur dynamischen Berechnung des Auftreffpunkts und/oder der Bewegungsbahn des Haltewerkzeugs herangezogen werden.

Derartige Inertialsensoren dienen der Erfassung von Beschleunigung und/oder Drehraten und/oder Trägheiten eines Systems und sind dem Fachmann zur Bewegungsdetektion bekannt. Bei der vorliegenden Erfindung kann durch die Erfassung von räumlichen Bewegungsdaten des Haltewerkzeugs sozusagen in Echtzeit auf Geschwindigkeit, Richtung und/oder Beschleunigung des zu bewegenden Werkstücks rückgerechnet werden. Die Einspeisung der Bewegungsdaten in die Anlagensteuerung kann als eine Redundanzmaßnahme zur Erhöhung der Sicherheit und Genauigkeit bei der Berechnung und Steuerung der Bewegungsbahn des Haltewerkzeugs verstanden werden. Durch diese Maßnahme und den fortlaufenden Abgleich der Ist-Bewegungsdaten des Haltewerkzeugs im Vergleich zur von der Anlagensteuerung berechneten Bewegungsbahn des Haltewerkzeugs kann die Sicherheit bezüglich eines definierten Auftreffpunkts innerhalb des Gefahrenbereichs erhöht werden.

Des Weiteren kann vorgesehen sein, dass zur fortlaufenden, dynamischen Berechnung der Bewegungsbahn des Haltewerkzeugs zumindest während Beschleunigungs- und/oder Abbremsphasen, eine resultierende Kraft, welche sich aus einer Schwerkraft und einer, sich aus der momentanen Beschleunigung des Werkstücks im Raum ergebenden, Trägheitskraft des Werkstücks zusammensetzt, bestimmt wird und der Bewegungsbahn eine Kompensationsbewegung in Form einer Translations- und/oder Rotationsbewegung des Haltewerkzeugs, derart überlagert wird, dass die resultierende Kraft des Werkstücks normal auf die vom Haltewerkzeug kontaktierte Werkstückoberfläche und/oder in Richtung auf einen Translations- und/oder Rotationsmittelpunkt des Haltewerkzeugs, wirkt.

Durch eine derartige Kompensationsbewegung können etwaige Fliehkräfte und/oder Trägheitskräfte des Werkstücks relativ zum Haltewerkzeug reduziert werden. Ein räumlich resultierender Beschleunigungsvektor kann analog dazu normal auf das Haltewerkzeug bzw. parallel zur Richtung der Haltekraft des Haltewerkzeugs wirken oder Null sein oder auf einen Translations- und/oder Rotationsmittelpunkt des Haltewerkzeugs gerichtet sein. Durch die erfindungsgemäße Überlagerung der Kompensationsbewegung mit der globalen Bewegungsbahn des Haltewerkzeugs kann der Einfluss möglicherweise undefinierter Reibbedingungen zwischen Werkstück und Haltewerkzeug deutlich reduziert werden. Insbesondere wenn die resultierende Kraft des Werkstücks normal auf die vom Haltewerkzeug kontaktierte Werkzeugoberfläche wirkt, kann der Einfluss einer unsicher definierten Reibkraft reduziert werden. Hierdurch kann die Sicherheit der Berechnung des Auftreffpunktes sowie der dynamischen Berechnung der Bewegungsbahn des Haltewerkzeuges deutlich erhöht werden.

In gewissen Fällen kann es vorteilhaft sein, dass die Kompensationsbewegung derart erfolgt, dass die resultierende Kraft in Richtung auf einen Translations- und/oder Rotationsmittelpunkt des Haltewerkzeugs wirkt. Dies kann insbesondere bei zweiseitig erfolgender Aufbringung der Haltekraft durch zum Beispiel einen Plattengreifer oder auch Zangengreifer Vorteile bringen. Ein derartiger Translations- und/oder Rotationsmittelpunkt des Haltewerkzeugs kann auch außerhalb des Haltewerkzeugs, wie beispielsweise an einem Gelenk des Manipulators liegen. Auch diese Maßnahme trägt deutlich zur Reduktion der Gefahr eines Werkstückverlusts durch das Haltewerkzeug bei, wodurch eine Erhöhung der Sicherheit bei der dynamischen Berechnung des Auftreffpunkts und/oder der Bewegungsbahn des Haltewerkzeugs gegeben ist.

Gemäß einer besonderen Ausprägung ist es möglich, dass die Kompensationsbewegung durch eine Translations- und/oder Rotationsbewegung des Haltewerkzeugs um den Werkstückschwerpunkt erfolgt. Die resultierende Kraft kann dabei, in Abhängigkeit der Geometrie des Haltewerkzeugs, parallel zur Haltekraft auf die vom Haltewerkzeug kontaktierte Werkstückoberfläche wirken.

Durch diese Maßnahme kann auch ein exzentrisches Aufbringen der Haltekraft, also vom Werkstückschwerpunkt beabstandet, erfolgen ohne dass unerwünschte Kippmomente auftreten. Über dies wird auf diese Weise die Ausbildung unerwünschter Trägheitskräfte des Werkstücks vermieden. Dies kann entscheidende Vorteile zur Vermeidung eines Werkstückverlusts liefern, wodurch die Sicherheit der Bewegung des Werkstücks erhöht werden kann.

Entsprechend einer vorteilhaften Weiterbildung kann vorgesehen sein, dass die Haltekraft einseitig auf eine Werkstückoberfläche durch zumindest einen Sauggreifer und/oder Magnetgreifer aufgebracht wird. Alternativ kann die Aufbringung der Haltekraft auf zwei gegenüberliegenden Werkstückoberflächen des Werkstücks durch zum Beispiel einen Platten- oder Zangengreifer erfolgen.

Derartige Haltewerkzeuge, wie etwa Sauggreifer oder Magnetgreifer mit einem oder mehreren Partialgreifern, bieten den Vorteil, dass die Haltekraft in Partialhaltekräfte aufgeteilt werden kann. Derartige Sauggreifer, Magnetgreifer, Plattengreifer oder Zangengreifer sind überdies einfach und günstig in der Beschaffung und sind relativ einfach mit einem mehrachsig beweglichen Manipulator kombinierbar.

Insbesondere kann es vorteilhaft sein, dass zumindest zwei voneinander durch einen vorgebbaren Abstand beabstandete Partialkontaktpositionen zur Aufbringung einer jeweiligen Partialhaltekraft auf die Werkstücküberfläche mittels zumindest einem eine korrespondierende Anzahl von Partialgreifern aufweisenden Sauggreifer oder Magnetgreifer verwendet werden. Hierbei können die Partialhaltekräfte mit steigender Entfernung der jeweiligen Partialkontaktpositionen vom Werkstückschwerpunkt in vorgebbarer Weise voneinander unterschiedlich bevorzugt zunehmend aufgebracht werden.

Durch diese Möglichkeit eine gezielte Einstellung von Partialhaltekräften vorzunehmen, können etwaige Kippmomente des Werkstücks gegenüber dem Haltewerkzeug aufgefangen bzw. kompensiert werden. Auf diese Weise wird das Risiko eines Werkstückverlusts minimiert. Die Steuerung der Partialhaltekräfte bzw. der Partialgreifer des Haltewerkzeugs erfolgt durch die Anlagensteuerung. Diese Maßnahme kann in vorteilhafter Weise mit der Berechnung eines etwaigen Auftreffpunkts und/oder der Bewegungsbahn des Haltewerkzeugs kombiniert werden.

Ferner kann vorgesehen sein, dass zumindest ein mit der Anlagensteuerung verbundener bevorzugt am Haltewerkzeug in Richtung der Werkstückoberfläche angeordneter Bewegungssensor zur Erkennung einer etwaigen Relativbewegung des Werkstücks relativ zum Haltewerkzeug verwendet wird.

Diese Möglichkeit der Detektion einer Relativbewegung des Werkstücks kann in vorteilhafter Weise in die Berechnung des Auftreffpunkts und/oder der Bewegungsbahn des Haltewerkzeugs integriert werden, um die Verfahrgeschwindigkeit des Haltewerkzeugs zu maximieren, ohne dass ein Werkstückverlust befürchtet werden muss. Des Weiteren erlaubt diese Ausbildungsform eine Erhöhung der Sicherheit, da eine dynamische Erkennung eines möglichen Werkstückverlustes durch das Haltewerkzeug in dynamischer Weise erfolgen kann. Ein derartiger Bewegungssensor kann dabei induktiv, kapazitiv oder auch optisch ausgebildet sein. Es ist dabei nicht zwingend erforderlich, dass das gesamte Werkstück durch den Bewegungssensor erfasst wird, da es bereits ausreicht, dass der Bewegungssensor eine Relativbewegung im Bereich der Kontaktposition und/oder Partialkontaktpositionen detektiert.

Darüber hinaus kann vorgesehen sein, dass bei Detektion einer Relativbewegung des Werkstücks relativ zum Haltewerkzeug, zur Verlagerung eines etwaigen Auftreffpunkts innerhalb des Gefahrenbereichs: eine Erhöhung der Haltekraft, und/oder eine Absenkung der Geschwindigkeit der Bewegungsbahn des Haltewerkzeugs, und/oder eine Änderung der Bewegungsbahn des Haltewerkzeugs in Richtung eines ungefährlichen Bereichs, und/oder eine überlagerte Kompensationsbewegung des Haltewerkzeugs, in die Berechnung und Steuerung der Bewegungsbahn des Haltewerkzeugs durch die Anlagensteuerung vorgenommen wird.

Die genannten Gegenmaßnahmen bei Detektion einer Relativbewegung des Werkstücks ermöglichen eine sichere und dynamische Berechnung der Bewegungsbahn des Haltewerkzeugs in der Weise, dass ein etwaiger Auftreffpunkt des Werkstücks bei Werkstückverlust innerhalb des Gefahrenbereichs des Bearbeitungsraums erfolgt. Im Grenzfall kann ein Werkstückverlust sogar vermieden werden.

Vorteilhaft ist auch eine Ausprägung gemäß welcher vorgesehen sein kann, dass bei Detektion einer Relativbewegung des Werkstücks während der Bewegung des Haltewerkzeugs eine fortlaufende Ermittlung eines aktuellen Reibwerts zwischen Haltewerkzeug und Werkstück durch Messung der Haltekraft und einer Relativverschiebung des Werkstücks erfolgt und der Anlagensteuerung als Messgröße zur Verfügung gestellt wird.

Auf diese Weise kann der kontinuierlich ermittelte Reibwert zwischen Haltewerkzeug und Werkstück beispielsweise zur Prozesskontrolle verwendet werden. Dies bietet einerseits die Möglichkeit die Anlagensteuerung derart auszulegen, dass eine gezielte Reaktion auf eine Veränderung, beispielsweise ein Unterschreiten eines vorgebbaren Minimalreibwertes, ausgelöst werden kann. Andererseits kann diese Messgröße dazu verwendet werden, um nachfolgende Werkstücke zu einer Verbesserung der Reibbedingungen zwischen Werkstück und Haltewerkzeug, durch z.B. eine Reinigung der Oberfläche, zuzuführen. Die Verarbeitung dieses Reibwerts als Messgröße innerhalb der Anlagensteuerung kann vom Fachmann auch dazu verwendet werden um statistische Auswertungen des Prozesses durchzuführen, womit die Sicherheit erhöht werden kann.

Zum besseren Verständnis der Erfindung wird diese anhand der nachfolgenden Figuren näher erläutert.

Es zeigen jeweils in stark vereinfachter, schematischer Darstellung:
- Fig. 1: schematische Darstellung eines beispielhaften Bearbeitungszentrums aus der Vogelperspektive;
- Fig. 2: schematische Darstellung einer berechneten Hüllkugel eines beispielhaften Werkstücks;
- Fig. 3: schematische Darstellung eines Werkstückverlustes mit Wurfbahn und Auftreffpunkt innerhalb des Gefahrenbereichs;
- Fig. 4: schematische Darstellung einer Bewegungsbahn eines Werkstücks bzw. eines Haltewerkzeugs;
- Fig. 5: schematische Darstellung möglicher wirkender Kräfte bei der Bewegung eines Werkstücks;
- Fig. 6: schematische Darstellung von (a) einer möglichen Kompensationsbewegung um den Werkstückschwerpunkt, sowie (b) der Ausbildung eines möglichen Kippmomentes;
- Fig. 7: schematische Darstellung einer Relativbewegung eines Werkstücks.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

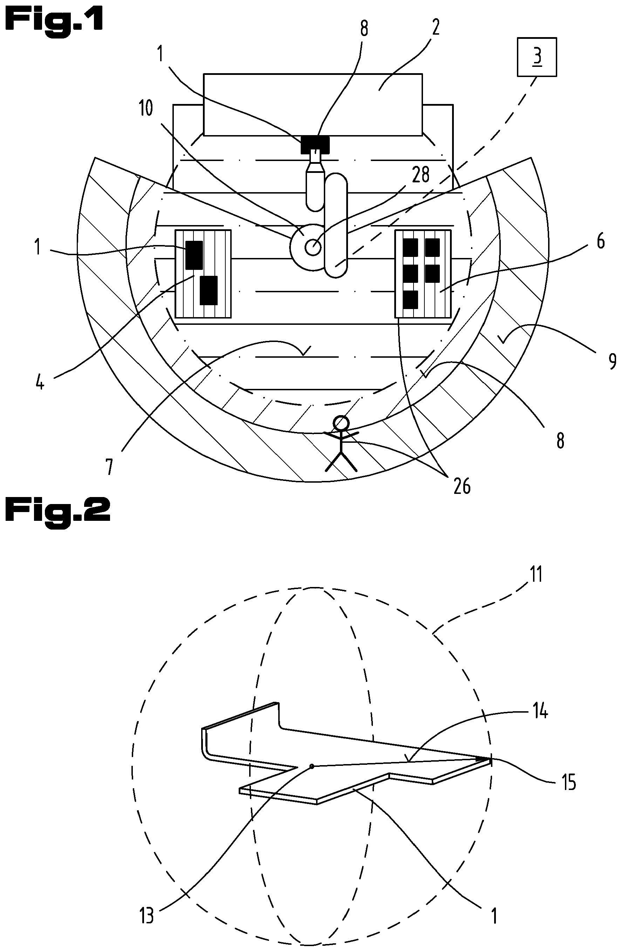

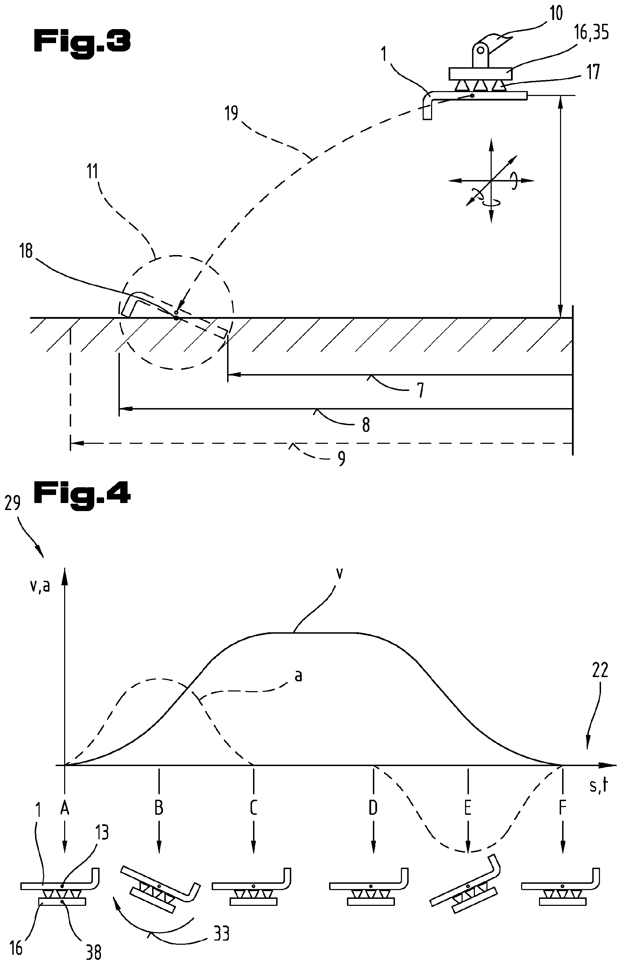

In Fig. 1 ist eine schematische Darstellung einer möglichen Anordnung einer Biegemaschine mit einem Manipulator 10 innerhalb eines schutzzaunlosen Sicherheitsbereichs 9 in der Vogelperspektive dargestellt. Der mehrachsig bewegliche Manipulator ist dabei innerhalb des Bearbeitungsraums 7 frei beweglich ausgebildet. Ein Werkstück 1 kann dabei von einem Haltewerkzeug 16 wohl innerhalb der Biegemaschine 2 manipuliert werden oder zu einer anderen Bestimmungsposition 5 bewegt werden. Des Weiteren ist eine Aufnahmeposition 4 für Rohmaterial bzw. ein Werkstück 1 vor der Bearbeitung gezeigt, wie auch eine Ablageposition 6, welche zur Ablage eines fertig bearbeiteten Werkstücks 1 dient. Die Bewegung des Manipulators 10 und/oder des Haltewerkzeugs 16 wird dabei von einer schematisch angedeuteten Anlagensteuerung 3 berechnet und gesteuert. Aus Fig. 1 ist weiters ersichtlich, dass der Manipulator 10 als fiktives Zentrum des Bearbeitungsraums dient. Die räumliche Dimension des Bearbeitungsraums 7 ist dabei durch die größtmögliche Erstreckung des ausgelenkten mehrachsig beweglichen Manipulators 10 sowie des daran gekoppelten Haltewerkzeugs 16 und eines aufgenommenen Werkstücks 1 definiert, kann jedoch auch in anderer Weise vom Bediener vorgegeben werden. Der in räumlicher Richtung nach außen anschließende Gefahrenbereich 8 kann in der Anlagensteuerung 3 hinterlegt werden, siehe hierzu vergleichend Fig. 3. Dies gilt auch für den anschließenden Sicherheitsbereich 9, welcher ebenso, bevorzugt dreidimensional, in der Anlagensteuerung 3 hinterlegt werden kann. Die dargestellte konzentrische Form des Sicherheitsbereichs 9 sowie des Gefahrenbereichs 8 und/oder des Bearbeitungsraums 7 kann durch jede beliebige aufgabenspezifische Form ersetzt werden.

Zur sicheren Bewegung eines Werkstücks 1, bevorzugt eines Blechteils, wird zuerst eine Bereitstellung des Werkstücks 1 an einer Aufnahmeposition 4 vorgenommen. Die Aufnahmeposition 4 kann dabei ebenso ein mit dem Manipulator 10 zusammenarbeitender zweiter Manipulator 10, welcher nicht dargestellt ist, oder auch eine alternative Bestimmungsposition 5 sein. Das Kontaktieren des Werkstücks 1 erfolgt dabei durch das Haltewerkzeug 16 an zumindest einer Werkstückoberfläche 12. Dabei übt das Haltewerkzeug 16 eine Haltekraft 20 auf die zumindest eine Werkstückoberfläche 12 aus. Um eine sichere translatorische und/oder rotatorische Bewegung des Werkstücks 1 zu einer vorgebbaren Bestimmungsposition 5 zu gewährleisten, wird eine Ermittlung des Werkstückschwerpunkts 13 vor und/oder während des Kontaktierens des Werkstücks 1 durchgeführt.

Ein Beispiel für ein zu bewegendes Werkstück ist in Fig. 2 dargestellt. Im Weiteren erfolgt die Berechnung einer Hüllkugel 11, welche durch den ermittelten Werkstückschwerpunkt 13 und einen Radius 14 zum weitest entfernten Punkt 15 des Werkstücks 1 definiert ist. Diese Hüllkugel 11 dient der Abschätzung der räumlichen Dimension eines bei Werkstückverlust umherfliegenden Werkstücks 1, bspw. eines Blechteils, welches sich um seinen Werkstückschwerpunkt 13 bis zu seinem Aufprall am Auftreffpunkt 18 drehen kann.

Erfindungsgemäß erfolgt während der Bewegung des Werkstücks 1, welches von einem Haltewerkzeug 16 gehalten wird, fortlaufend eine Berechnung eines etwaigen Auftreffpunkts 18 bei Werkstückverlust durch das Haltewerkzeug 16. Eine derartige Situation ist schematisch in Fig. 3 dargestellt. Der Auftreffpunkt 18 ist dabei durch die Wurfbahn 19 in horizontaler bzw. vertikaler Richtung vom Haltewerkzeug 16 beabstandet. Die Wurfbahn 19 kann dabei durch die Berechnung einer Wurfparabel angenähert werden. Wie aus Fig. 3 ersichtlich, ist es das Ziel der Erfindung, die Bewegung des Werkstücks 1 derart auszuführen, dass bei einem möglichen Werkstückverlust der Auftreffpunkt 18 immer innerhalb des Gefahrenbereichs 8 erfolgt. Deshalb erfolgt zeitgleich zur Berechnung des Auftreffpunkts 18 eine dynamische Berechnung und Steuerung der Bewegungsbahn 22 des Haltewerkzeugs 16. Die Bewegungsbahn 22 kann dabei derart fortlaufend korrigiert werden, dass der etwaige Auftreffpunkt 18 des Werkstücks 1 innerhalb des Gefahrenbereichs 8 erfolgt. Die Bewegung des Werkstücks 1 respektive des Haltewerkzeugs 16 ist in Fig. 3 schematisch durch Bewegungspfeile angedeutet. In der gewählten Darstellung ist das Werkstück 1 durch ein als Sauggreifer 35 ausgebildetes Haltewerkzeug 16 auf seiner Bewegungsbahn 22 geführt.

Allgemein für die Erfindung gilt, dass dem Fachmann bekannte Verwendung von Koordinatensystemen und Bezugspunkten zur einheitlichen Beschreibung von Richtungen, Geschwindigkeiten, Beschleunigungen und dergleichen verwendet werden können. Aus diesem Grund wird auf eine eingehende Beschreibung von möglichen Koordinatensystemen und/oder Bezugspunkten zur Berechnung des Auftreffpunkts 18 und/oder der dynamischen Berechnung und Steuerung einer Bewegungsbahn 22 des Haltewerkzeugs 16 im Detail verzichtet. Ebenso ist dem Fachmann eine möglicherweise erforderliche Koordinatentransformation zur Herstellung eines funktionalen Zusammenhangs zwischen natürlichen Koordinatenangaben und der räumlichen Ausrichtung des Haltewerkzeugs 16 respektive des Werkstücks 1 und/oder des Manipulators 10 bekannt. Das Gleiche gilt für die Berechnung von Geschwindigkeiten, Richtungen, Kräften sowie Beschleunigungen im Raum. Es kann dabei von Vorteil sein, dass zur Modellierung des Bearbeitungsraums 7 wie auch des Gefahrenbereichs 8 und/oder des Sicherheitsbereichs 9 kleinere räumliche Teileinheiten, wie etwa ein dreidimensionales Gitter oder auch Voxel, verwendet werden.

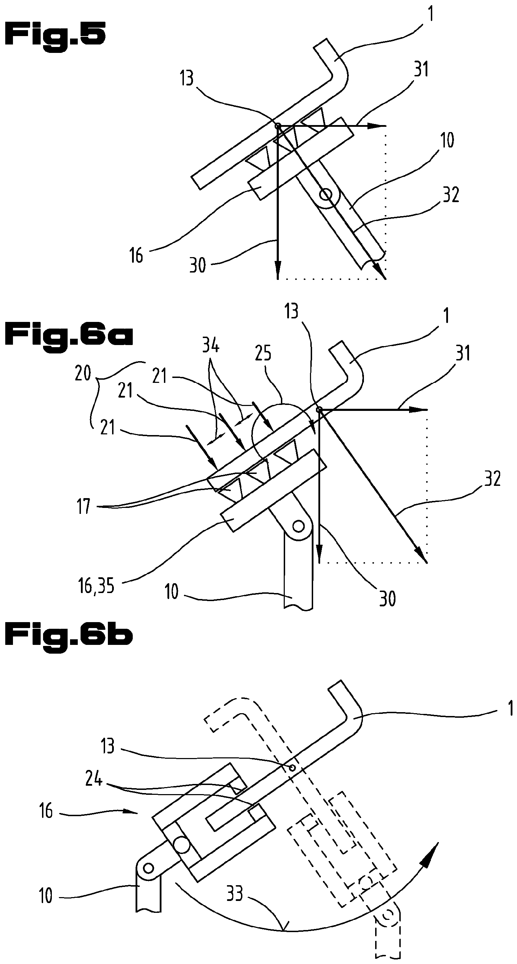

In Fig. 4 ist eine weitere und gegebenenfalls für sich eigene Ausführungsform des erfindungsgemäßen Verfahrens gezeigt. Um unnötige Wiederholungen zu vermeiden, wird auf die detaillierte Beschreibung der Fig. 1 bis 3 bzw. 5 bis 7 verwiesen und Bezug genommen. Wie in Fig. 4 dargestellt, kann es vorteilhaft sein, eine Kompensationsbewegung 33 der Bewegungsbahn 22 des Haltewerkzeugs 16 zu überlagern. Aus der Zusammenschau mit Fig. 5 ist ersichtlich, dass bei einer momentanen Beschleunigung des Werkstücks 1 im Raum eine Trägheitskraft 31 sowie die Schwerkraft 30 auf das Werkstück 1 wirkt. Aus diesen beiden Kräften ergibt sich eine resultierende Kraft 32, welche am Werkstückschwerpunkt 13 des Werkstücks 1 angreift. Wie in Fig. 4 ersichtlich, sind auf der Ordinate Bewegungsdaten 29, wie etwas Geschwindigkeit (v) und Beschleunigung (a) ersichtlich. Auf der Abszisse sind die Daten der Bewegungsbahn 22, wie etwa der Weg im Raum (s) oder über die Zeit (t) aufgetragen. Fig. 4 stellt beispielhaft eine typische Bewegung eines Haltewerkzeugs 16 dar. In der Beschleunigungsphase, welche insbesondere Position B in Fig. 4 entspricht, wird zur Kompensation der resultierenden Kraft 32 eine Kompensationsbewegung 33 in Form einer Translations- und/oder Rotationsbewegung des Haltewerkzeugs 16 durchgeführt und der Bewegungsbahn 22 überlagert. Bei Erreichen der Nominalgeschwindigkeit, wie in Position C von Fig. 4 ersichtlich, ist keine Beschleunigung auf das Werkstück 1 vorhanden, wodurch keine Trägheitskraft 31 auf das Werkstück 1 wirkt. Gegen Ende der Bewegungsbahn 22, das bedeutet bei Erreichen einer Bestimmungsposition 5 oder auch einer Ablageposition 6, ist ein Bremsvorgang, welcher als negative Beschleunigung dargestellt ist, ersichtlich. Die negative Beschleunigung wird in Abbildung d eingeleitet und von einer der Bewegungsbahn 22 überlagerten Kompensationsbewegung 33 begleitet. Dies ist insbesondere aus Punkt E in Fig. 4 ersichtlich. Die in Fig. 4 dargestellte, beispielhafte Situation zeigt, dass die Kompensationsbewegung 33 derart erfolgt, dass die resultierende Kraft 32 des Werkstücks normal auf die vom Haltewerkzeug 16 kontaktierte Werkstückoberfläche 12 wirkt. Analog zu dieser beschriebenen Vorgangsweise kann es in Abhängigkeit vom gewählten Haltewerkzeug 16 vorteilhaft sein, dass die Kompensationsbewegung 33 derart durchgeführt wird, dass die resultierende Kraft 32 in Richtung auf einen Translations- und/oder Rotationsmittelpunkt des Haltewerkzeugs 16 wirkt.

In Fig. 5 ist eine schematische Darstellung des, dem Fachmann an sich geläufigen, Kräfteverhältnisses zwischen Schwerkraft 30 und Trägheitskraft 31 sowie der resultierenden Kraft 32 ersichtlich. In der dargestellten Form bei der das Haltewerkzeug 16 als Sauggreifer 35 ausgebildet ist, wirkt die resultierende Kraft 32 sowohl normal auf die kontaktiere Werkstückoberfläche 12 und in Richtung auf einen Translations- und/oder Rotationsmittelpunkt des Haltewerkzeugs 16 bzw. des Manipulators 10. Die in Fig. 5 dargestellte Situation ist sinngemäß auf die Erfindung und darauf bezogene Ausführungsbeispiele der Fig. 1 bis 4 sowie 6 bis 7 zu übertragen. Es ist ferner aus Fig. 5 leicht ableitbar, dass die resultierende Kraft 32 bei z.B. einer Verkippung des Haltewerkzeugs 16 in Richtung auf einen Translations- und/oder Rotationsmittelpunkt des Haltewerkzeugs (16) gerichtet sein kann.

In Fig. 6 sind weitere mögliche Ausführungsformen des erfindungsgemäßen Verfahrens dargestellt. In der vorliegenden Fig. 6 ist das Haltewerkzeug 16 als mehrteiliger Sauggreifer 35 bzw. als Zangengreifer ausgebildet. Das Haltewerkzeug 16 weist in Fig. 6a auf diese Art mehrere, im konkreten Fall 3, Partialgreifer 17 auf. Diese Partialgreifer 17 üben jeweils Partialhaltekräfte 21 auf die Werkstückoberfläche 12 des Werkstücks 1 an den jeweiligen Partialkontaktpositionen 24 aus. Die Summe der Partialhaltekräfte 21 ist die Haltekraft 20. Wie in der dargestellten Situation in Fig. 6a ersichtlich, liegt dabei der Werkstückschwerpunkt 13 von der gemeinsamen Kontaktposition 23 bzw. den Partialkontaktpositionen 24 des Haltewerkzeugs 16 entfernt. In Zusammenschau mit dem Kräfteparalellogramm aus Fig. 5 kann ersehen werden, dass die resultierende Kraft 32 ein Kippmoment 25 auf das Werkstück 1 an der zum Werkstückschwerpunkt 13 nächstliegenden Partialkontaktposition 24 ausübt. In der dargestellten Ausführungsform ist die unterschiedliche Höhe der Partialhaltekräfte 21 durch unterschiedlich lange Pfeile schematisch angedeutet. Zur Verbesserung der Kontaktbedingungen und Vermeidung des Kippmomentes 25 steigt die Höhe der Partialhaltekräfte 21 mit steigender Entfernung der jeweiligen Partialkontaktpositionen vom Werkstückschwerpunkt 13 an. Die Partialkontaktpositionen 24 respektive die Partialgreifer 17 sind in einem vorgebbaren Abstand 34 voneinander getrennt angeordnet. Die mittels Sauggreifern 35 dargestellte Ausführungsform ist analog mittels Magnetgreifern ausführbar.

In Fig. 6b ist eine weitere Möglichkeit der Ausführung einer Kompensationsbewegung 33 dargestellt. Hierbei erfolgt die Kompensationsbewegung 33 durch eine Translations- und/oder Rotationsbewegung des Haltewerkzeugs 16 um den Werkstückschwerpunkt 13. Wie dargestellt, kann dabei die resultierende Kraft 32 derart wirken, dass ein Kippmoment 25 am Haltewerkzeug 16 auftritt. Die eingeleitete Kompensationsbewegung 33 wird dabei um den Werkstückschwerpunkt 13 ausgeführt. Bei der Verwendung eines Zangengreifers oder Plattengreifers führt dies im Besonderen dazu, dass die resultierende Kraft 32 in Richtung auf einen Translations- und/oder Rotationsmittelpunkt des Haltewerkzeugs 16 wirkt. Ebenso ist analog zu einem Sauggreifer 35 die Aufbringung der Haltekraft 20 von zwei Seiten auf das Werkstück 1 an jeweiligen Partialkontaktpositionen 24 ersichtlich.

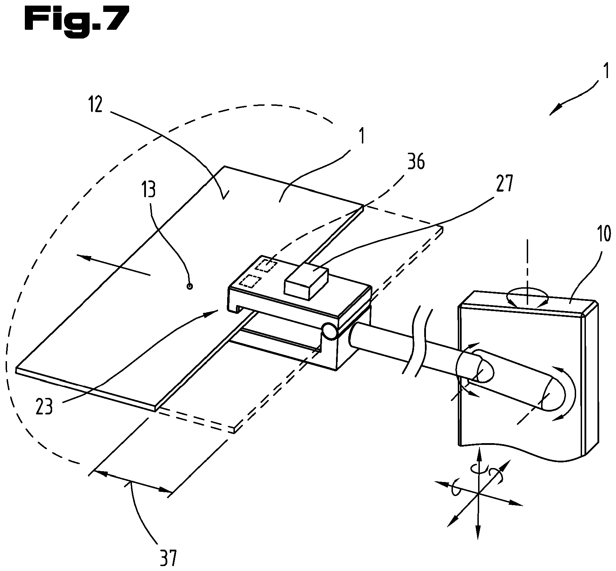

In Fig. 7 ist beispielhaft eine Ausführungsform gezeigt, in welcher das Haltewerkzeug 16 als Zangengreifer ausgebildet ist. Dabei erfolgt die Aufbringung der Haltekraft 20 auf zwei gegenüberliegenden Werkstückoberflächen 12 des Werkstücks 1. Am Haltewerkzeug 16 ist ein optisches Sensorelement 27 ausgebildet. Das Sensorelement 27 kann dazu verwendet werden, die Werkstückgeometrie des Werkstücks 1 zu erfassen und die erfassten Messdaten zur Ermittlung des Werkstückschwerpunkts 13 der Anlagensteuerung 3 zur Verfügung zu stellen. Im gewählten Darstellungsbeispiel in Fig. 7 kann weiters die Ausbildung von zwei Bewegungssensoren 36 ersehen werden, welche eine Erfassung einer Relativverschiebung 37 des Werkstücks 1 möglich machen. Für die erfindungsgemäße Ausführung des Verfahrens ist bereits ein Bewegungssensor 36 ausreichend. Die ursprünglich eingenommene Lage des Werkstücks 1 ist strichliert dargestellt. Die erfasste Relativverschiebung des Werkstücks 1 relativ zum Haltewerkzeug 16 dient der dynamischen Berechnung eines etwaigen Auftreffpunkts 18 innerhalb des Gefahrenbereichs 8 durch die veränderte Position und/oder Bewegungsgeschwindigkeit des Werkstücks 1. Auf diese Weise sind Gegenmaßnahmen, wie etwa die Erhöhung der Haltekraft 20 oder auch eine Absenkung der Geschwindigkeit des Haltewerkzeugs 16 entlang seiner Bewegungsbahn 22 möglich. Ebenso ist in Analogie zu den zuvor beschriebenen Kompensationsbewegungen 33 des Haltewerkzeugs 16 durch eine Überlagerung der Bewegungsbahn 22 möglich. Über dies wird durch die Kenntnis der Relativverschiebung 37, respektive einer aufgenommenen Relativverschiebungsgeschwindigkeit und der Haltekraft 20 die Berechnung des aktuellen Reibwerts zwischen Haltewerkzeugs 16 und Werkstück 1 ermöglicht. Eine Anordnung von einem oder mehreren Bewegungssensoren 36 ist ebenso an einem als Sauggreifer 35 oder Magnetgreifer ausgebildeten Haltewerkzeug 16 denkbar. Die vorliegende Erfindung betrifft auch die Verwendung eines Inertialsensors 38 zur fortlaufenden Erfassung von räumlichen Bewegungsdaten 29 des Haltewerkzeugs 16. Diese Bewegungsdaten 29 können zur dynamischen Berechnung des Auftreffpunkts 18 und/oder der Bewegungsbahn 22 des Haltewerkzeugs 16 herangezogen werden. Der Inertialsensor 38 ist dabei mit der Anlagensteuerung 3 verbunden. Eine beispielhafte Anordnung eines derartigen Inertialsensors 38 ist in Fig. 4 schematisch innerhalb des Haltewerkzeugs 16 angedeutet. Auf diese Weise kann eine dynamische Erfassung der Ist-Bewegungsdaten des Haltewerkzeugs 16 respektive des Werkstücks 1, durchgeführt werden und mit den berechneten Bewegungsdaten 29 des Haltewerkzeugs 16 abgeglichen werden. Die Positionierung des Inertialsensors 38 kann dabei vom Fachmann auch an anderen Stellen des Haltewerkzeugs 16 und/oder des Manipulators 10 durchgeführt werden und ist somit mit allen bislang diskutierten Ausführungsbeispielen kompatibel.

Für alle gezeigten Ausführungsformen gilt, dass die Berechnung von einem oder mehreren Rechnern in Redundanz erfolgen kann und der Anlagensteuerung 3 zur Verfügung gestellt wird. Ebenso ist es möglich, dass eine der Anlagensteuerung 3 hierarchisch übergeordnete Sicherheitssteuerung fortlaufend einen Abgleich der redundant berechneten Auftreffpunkte 18 und/oder der Bewegungsbahn 22 des Haltewerkzeugs 16 durchgeführt wird.

Ein weiterer Aspekt der Erfindung betrifft die Verwendung eines bevorzugt laseroptischen Umgebungssensors 28, welcher beispielsweise in Fig. 1 schematisch dargestellt ist. Der Umgebungssensor 28 erfasst fortlaufend den Sicherheitsbereich 9 und ist bevorzugt als 3D-Sensor ausgebildet. Ein derartiger Umgebungssensor 28 kann beispielsweise an der Biegemaschine 2 aber auch, wie in Fig. 1 ersichtlich, am Manipulator 10 angeordnet sein. Ein derartiger Umgebungssensor 28 dient dazu bewegliche Kollisionsobjekte 26 und/oder deren Bewegungsgeschwindigkeit und/oder -richtung zu erfassen. Diese Messgrößen können von der Anlagensteuerung 3 in die Berechnung des etwaigen Auftreffpunktes 18 und/oder der Bewegungsbahn 22 des Haltewerkzeugs 16 miteinbezogen werden. Dies erlaubt eine dynamische Steuerung der Bewegungsbahn 22 als eine der möglichen Gegenreaktionen der Anlagensteuerung 3 beim Eintritt eines beweglichen Kollisionsobjektes 26 innerhalb des Sicherheitsbereichs 9 oder auch des Gefahrenbereichs 8 sowie des Bearbeitungsraums 7.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Werkstück | 30 | Schwerkraft |
| 2 | Biegemaschine | 31 | Trägheitskraft |
| 3 | Anlagensteuerung | 32 | resultierende Kraft |
| 4 | Aufnahmeposition | 33 | Kompensationsbewegung |
| 5 | Bestimmungsposition | 34 | Abstand |
| 6 | Ablageposition | 35 | Sauggreifer |
| 7 | Bearbeitungsraum | 36 | Bewegungssensor |
| 8 | Gefahrenbereich | 37 | Relativverschiebung |
| 9 | Sicherheitsbereich | 38 | Inertialsensor |
| 10 | Manipulator | | |
| 11 | Hüllkugel | | |
| 12 | Werkstückoberfläche | | |
| 13 | Werkstückschwerpunkt | | |
| 14 | Radius | | |
| 15 | Am weitesten vom Werkstückschwerpunkt entfernter Punkt | | |
| 16 | Haltewerkzeug | | |
| 17 | Partialgreifer | | |
| 18 | Auftreffpunkt | | |
| 19 | Wurfbahn | | |
| 20 | Haltekraft | | |
| 21 | Partialhaltekraft | | |
| 22 | Bewegungsbahn | | |
| 23 | Kontaktposition | | |
| 24 | Partialkontaktposition | | |
| 25 | Kippmoment | | |
| 26 | Kollisionsobjekt | | |
| 27 | optisches Sensorelement | | |
| 28 | Umgebungssensor | | |
| 29 | Bewegungsdaten | | |

## Patentansprüche

1. Verfahren zur Steuerung einer sicheren Bewegung eines Werkstückes (1), bevorzugt eines Blechteils, in einem, bevorzugt schutzzaunlosen, Bearbeitungsraum (7) einer Biegemaschine (2), umfassend die Verfahrensschritte:
- Bereitstellung des Werkstücks (1), bevorzugt eines Blechteils, an einer Aufnahmeposition (4),
- Kontaktieren des Werkstücks (1) an zumindest einer Werkstückoberfläche (12) mittels eines Haltewerkzeugs (16), wobei das Haltewerkzeug (16) an einem mehrachsig beweglichen Manipulator (10) angeordnet ist,
- Aufbringen einer Haltekraft (20) auf zumindest eine Werkstückoberfläche (12),
- Translatorische und/oder rotatorische Bewegung des Werkstücks (1) zu einer vorgebbaren Bestimmungsposition (5) und/oder Ablageposition (6) ,
**dadurch gekennzeichnet, dass**
- eine Ermittlung eines Werkstückschwerpunkts (13) vor und/oder während des Kontaktierens des Werkstücks (1) erfolgt, und
- eine Hüllkugel (11) berechnet wird, welche Hüllkugel (11) durch den ermittelten Werkstückschwerpunkt (13) und einen Radius (14) zum weitest entfernten Punkt (15) des Werkstücks (1) definiert ist, und
- fortlaufend, zumindest während der Bewegung des Werkstücks (1), eine Berechnung eines etwaigen, räumlich vom Haltewerkzeug (16) entfernten und durch eine Wurfbahn (19) des Werkstücks (1) bei Werkstückverlust durch das Haltewerkzeug (16), definierten Auftreffpunkts (18) des Werkstücks (1), erfolgt, und
- gleichzeitig zur Berechnung des Auftreffpunkts (18) eine dynamische Berechnung und Steuerung einer Bewegungsbahn (22) des Haltewerkzeugs (16) derart von einer Anlagensteuerung (3) vorgenommen wird, dass der etwaige Auftreffpunkt (18) des Werkstücks (1) bei Werkstückverlust innerhalb eines Gefahrenbereichs (8) des Bearbeitungsraums (7) erfolgt.

2. Verfahren nach Anspruch 1 **dadurch gekennzeichnet, dass** die Ermittlung des Werkstückschwerpunkts (13) anhand vorgebbarer Werkstückdaten aus der Anlagensteuerung (3) erfolgt.

3. Verfahren nach Anspruch 1 oder 2 **dadurch gekennzeichnet, dass** zumindest ein, mit der Anlagensteuerung (3) verbundenes, bevorzugt optisches, Sensorelement (27), zur Erfassung einer Werkstückgeometrie verwendet wird.

4. Verfahren nach Anspruch 3 **dadurch gekennzeichnet, dass** die erfasste Werkstückgeometrie in die Berechnung der Bewegungsbahn (22) des Haltewerkzeugs (16) derart einbezogen wird, dass eine Kontaktposition (23) des Haltewerkzeugs (16) am Werkstück (1) relativ zum Werkstückschwerpunkt (13) derart von der Anlagensteuerung (3) berechnet wird, dass trägheitsbedingte Kippmomente (25) des Werkstücks (1) gegenüber dem Haltewerkzeug (16) während der Bewegung minimiert werden, um bei Werkstückverlust den etwaigen Auftreffpunkt (18) innerhalb des Gefahrenbereichs (8) sicher zu stellen.

5. Verfahren nach einem der vorhergehenden Ansprüche **dadurch gekennzeichnet, dass** etwaige ortsfeste Kollisionsobjekte (26) im Bearbeitungsraum (7) von der Anlagensteuerung berücksichtigt und in die Berechnung des etwaigen Auftreffpunktes (18) und/oder der Bewegungsbahn (22) des Haltewerkzeugs (16) miteinbezogen werden.

6. Verfahren nach einem der vorhergehenden Ansprüche **dadurch gekennzeichnet, dass** etwaige bewegliche Kollisionsobjekte (26) im Bearbeitungsraum (7) durch zumindest einen, bevorzugt laseroptischen, Umgebungssensor (28) fortlaufend erfasst werden und in die Berechnung des etwaigen Auftreffpunktes (18) und/oder der Bewegungsbahn (22) des Haltewerkzeugs (16) miteinbezogen werden.

7. Verfahren nach Anspruch 6 **dadurch gekennzeichnet, dass** die Geschwindigkeit und/oder Bewegungsrichtung eines beweglichen Kollisionsobjektes (26) erfasst und in die Berechnung des etwaigen Auftreffpunktes (18) und/oder der Bewegungsbahn (22) des Haltewerkzeugs (16) miteinbezogen werden.

8. Verfahren nach einem der vorhergehenden Ansprüche **dadurch gekennzeichnet, dass** zumindest ein, im Haltewerkzeug (16) angeordneter, Inertialsensor (38) zur fortlaufenden Erfassung von räumlichen Bewegungsdaten (29) des Haltewerkzeugs (16) verwendet wird, welche zur dynamischen Berechnung des Auftreffpunkts (18) und/oder der Bewegungsbahn (22) des Haltewerkzeugs (16) herangezogen werden.

9. Verfahren nach einem der vorhergehenden Ansprüche **dadurch gekennzeichnet, dass** zur fortlaufenden, dynamischen Berechnung der Bewegungsbahn (22) des Haltewerkzeugs (16) zumindest während Beschleunigungs- und/oder Abbremsphasen, eine resultierende Kraft (32), welche sich aus der Schwerkraft (30) und einer, sich aus der momentanen Beschleunigung des Werkstücks im Raum ergebenden, Trägheitskraft (31) des Werkstücks (1) zusammensetzt, bestimmt wird und der Bewegungsbahn (22) eine Kompensationsbewegung (33) in Form einer Translations- und/oder Rotationsbewegung des Haltewerkzeugs (16), derart überlagert wird, dass die resultierende Kraft (32) des Werkstücks (1) normal auf die vom Haltewerkzeug (16) kontaktierte Werkstückoberfläche (12) und/oder in Richtung auf einen Translations- und/oder Rotationsmittelpunkt des Haltewerkzeugs (16), wirkt.

10. Verfahren nach Anspruch 9 **dadurch gekennzeichnet, dass** die Kompensationsbewegung (33) durch eine Translations- und/oder Rotationsbewegung des Haltewerkzeugs (16) um den Werkstückschwerpunkt (13) erfolgt.

11. Verfahren nach einem der vorhergehenden Ansprüche **dadurch gekennzeichnet, dass** zur einseitigen Aufbringung der Haltekraft (20) auf eine Werkstückoberfläche zumindest ein Sauggreifer (35) und/oder Magnetgreifer verwendet wird, oder zur Aufbringung einer Haltekraft (20) auf zwei gegenüberliegende Werkstückoberflächen ein Plattengreifer oder Zangengreifer, verwendet wird.

12. Verfahren nach Anspruch 11 **dadurch gekennzeichnet, dass** auf der Werkstückoberfläche zumindest zwei, voneinander durch einen vorgebbaren Abstand (34) beabstandete, Partialkontaktpositionen (24), (23) zur Aufbringung einer jeweiligen Partialhaltekraft (21) auf die Werkstückoberfläche (12) mittels zumindest einem, eine korrespondierende Anzahl von Partialgreifern (17) aufweisenden, Sauggreifer (35) oder Magnetgreifer, verwendet werden, wobei die Partialhaltekräfte (21) mit steigender Entfernung der jeweiligen Partialkontaktpositionen (24) vom Werkstückschwerpunkt (13) in vorgebbarer Weise voneinander unterschiedlich bevorzugt zunehmend aufgehracht werden

13. Verfahren nach einem der vorhergehenden Ansprüche **dadurch gekennzeichnet, dass** zumindest ein, mit der Anlagensteuerung (3) verbundener, bevorzugt am Haltewerkzeug (16) in Richtung der Werkstückoberfläche (12) angeordneter, Bewegungssensor (36) zur Erkennung einer etwaigen Relativbewegung des Werkstücks (1) relativ zum Haltewerkzeug (16) verwendet wird.

14. Verfahren nach Anspruch 13 **dadurch gekennzeichnet, dass** bei Detektion einer Relativbewegung des Werkstücks (1) relativ zum Haltewerkzeug (16), zur Verlagerung eines etwaigen Auftreffpunkts (18) innerhalb des Gefahrenbereichs (8):
- eine Erhöhung der Haltekraft (20), und/oder
- eine Absenkung der Geschwindigkeit der Bewegungsbahn (22) des Haltewerkzeugs (16),
- und/oder eine Änderung der Bewegungsbahn (22) des Haltewerkzeugs (16) in Richtung eines ungefährlichen Bereichs,
- und/oder eine resultierende Kraft (32), welche sich aus der Schwerkraft (30) und einer, sich aus der momentanen Beschleunigung des Werkstücks (1) im Raum ergebenden, Trägheitskraft (31) des Werkstücks (1) zusammensetzt bestimmt wird und eine die resultierende Kraft (32) überlagernde Kompensationsbewegung (33) des Haltewerkzeugs (16), in die Berechnung und Steuerung der Bewegungsbahn (22) des Haltewerkzeugs (16) durch die Anlagensteuerung (3) vorgenommen wird.

15. Verfahren nach einem der Ansprüche 13 oder 14 **dadurch gekennzeichnet, dass** bei Detektion einer Relativbewegung des Werkstücks (1) während der Bewegung des Haltewerkzeugs (16) eine fortlaufende Ermittlung eines aktuellen Reibwerts zwischen Haltewerkzeug (16) und Werkstück (1) durch Messung der Haltekraft (20) und einer Relativverschiebung (37) des Werkstücks (1) erfolgt und der Anlagensteuerung (3) als Messgröße zur Verfügung gestellt wird.

## Claims

1. A method for controlling a safe movement of a workpiece (1), preferably a sheet metal part, in a processing space (7), preferably not having a safety fence, of a bending machine (2), comprising the method steps:
- providing the workpiece (1), preferably a sheet metal part, at a pick-up position (4),
- contacting the workpiece (1) at at least one workpiece surface (12) by means of a holding tool (16), wherein the holding tool (16) is arranged on a manipulator (10) movable on multiple axes,
- applying a holding force (20) to at least one workpiece surface (12),
- translational and/or rotational movement of the workpiece (1) to a predefinable final position (5) and/or drop-off position (6), **characterized in that**
- determining a workpiece center of gravity (13) takes place prior to and/or while contacting the workpiece (1), and
- an enveloping sphere (11) is calculated, which enveloping sphere (11) is defined by the determined workpiece center of gravity (13) and a radius (14) to the most distant point (15) of the workpiece (1), and
- a possible point of impact (18) of the workpiece (1), which is spatially distant from the holding tool (16) and defined by a trajectory (19) of the workpiece (1) in case the holding tool (16) loses the workpiece, is continuously calculated, at least during the movement of the workpiece (1), and
- a dynamic calculation and control of a movement path (22) of the holding tool (16) is carried out by a system control (3) at the same time as the calculation of the point of impact (18) such that the possible point of impact (18) of the workpiece (1) in case of a workpiece loss takes place within a hazard region (8) of the processing space (7).

2. The method according to claim 1, **characterized in that** determining the workpiece center of gravity (13) is carried out based on predefinable workpiece data from the system control (3).

3. The method according to claim 1 or 2, **characterized in that** at least one, preferably optical, sensor element (27) connected to the system control (3) is used for detecting a workpiece geometry.

4. The method according to claim 3, **characterized in that** the detected workpiece geometry is factored into the calculation of the movement path (22) of the holding tool (16) such that a contacting position (23) of the holding tool (16) on the workpiece (1) relative to the workpiece center of gravity (13) is calculated by the system control (3) such that inertia-induced tilting moments (25) of the workpiece (1) with respect to the holding tool (16) during the movement are minimized in order to ensure the possible point of impact (18) within the hazard region (8).

5. The method according to one of the preceding claims, **characterized in that** possible stationary collision objects (26) in the processing space (7) are considered by the system control and factored into the calculation of the possible point of impact (18) and/or the movement path (22) of the holding tool (16).

6. The method according to one of the preceding claims, **characterized in that** possible movable collision objects (26) in the processing space (7) are continuously detected by at least one, preferably laser optical, environment sensor (28) and factored into the calculation of the possible point of impact (18) and/or the movement path (22) of the holding tool (16).

7. The method according to claim 6, **characterized in that** the speed and/or movement path of a movable collision object (26) are detected and factored into the calculation of the possible point of impact (18) and/or the movement path (22) of the holding tool (16).

8. The method according to one of the preceding claims, **characterized in that** at least one inertial sensor (38) arranged in the holding tool (16) is used for continuously detecting spatial movement data (29) of the holding tool (16), which movement data (29) are used for dynamically calculating the point of impact (18) and/or the movement path (22) of the holding tool (16).

9. The method according to one of the preceding claims, **characterized in that** for continuously, dynamically calculating the movement path (22) of the holding tool (16) at least during acceleration and/or braking phases, a resulting force (32), which is a combination of the gravity (30) and an inertial force (31) that results from the momentary acceleration of the workpiece in the space, is determined and a compensation movement (33) in the form of a translational and/or rotational movement of the holding tool (16) is superimposed on the movement path (22), such that the resulting force (32) of the workpiece (1) acts on the workpiece surface (12) contacted by the holding tool (16) in a normal manner and/or in a direction toward a translational and/or rotational center of the holding tool (16).

10. The method according to claim 9, **characterized in that** the compensation movement (33) is carried out by means of a translational and/or rotational movement of the holding tool (16) about the workpiece center of gravity (13).

11. The method according to one of the preceding claims, **characterized in that** for applying the holding force (20) to a workpiece surface on one side, at least one suction gripper (35) and/or magnet gripper is used, or for applying a holding force (20) to two workpiece surfaces opposite one another, a plate gripper or pincer gripper is used.

12. The method according to claim 11, **characterized in that** on the workpiece surface at least two partial contacting positions (24), (23) which are spaced apart from one another by a predefinable distance (34), for applying a respective partial holding force (21) to the workpiece surface (12) by means of at least one suction gripper (35) or magnet gripper having a corresponding number of partial grippers (17) is used, wherein, with an increasing distance between the respective partial contacting positions (24) and the workpiece center of gravity (13), the partial holding forces (21) are applied differently from one another in a predefinable manner, preferably in an increasing manner.

13. The method according to one of the preceding claims, **characterized in that** at least one movement sensor (36) connected to the system control (3) and preferably arranged on the holding tool (16) in the direction of the workpiece surface (12) is used for recognizing a possible relative movement of the workpiece (1) relative to the holding tool (16).

14. The method according to claim 13, **characterized in that** upon detection of a relative movement of the workpiece (1) relative to the holding tool (16), for moving a possible point of impact (18) within a hazard region (8):
- the holding force (20) is increased, and/or
- the speed of the movement path (22) of the holding tool (16) is decreased,
- and/or the movement path (22) of the holding tool (16) is changed in the direction of a nonhazardous region,
- and/or a resulting force (32), which is a combination of the gravity (30) and an inertial force (31) of the workpiece (1) that results from the momentary acceleration of the workpiece (1) in the space, is determined, and a compensation movement (33) of the holding tool (16) superimposing the resulting force (32) is carried out, in the calculation and control of the movement path (22) of the holding tool (16) by means of the system control (3).

15. The method according to one of claims 13 or 14, **characterized in that** upon detection of a relative movement of the workpiece (1) during the movement of the holding tool (16), a current friction coefficient between the holding tool (16) and the workpiece (1) is continuously determined by measuring the holding force (20) and a relative displacement (37) of the workpiece (1) and is made available to the system control (3) as a measured variable.

## Revendications

1. Procédé de contrôle d'un mouvement sécurisé d'une pièce (1), de préférence d'une pièce en tôle, dans un espace d'usinage (7), de préférence sans clôture de protection, d'une machine de pliage (2), comprenant les étapes suivantes :
- mise à disposition de la pièce (1), de préférence d'une pièce en tôle, au niveau d'une position de logement (4),
- mise en contact de la pièce (1), au niveau d'au moins d'une surface de pièce (12), avec un outil de maintien (16), dans lequel l'outil de maintien (16) est disposé au niveau d'un manipulateur (10) mobile sur plusieurs axes,
- application d'une force de maintien (20) sur au moins une surface de la pièce (12),
- mouvement de translation et/ou de rotation de la pièce (1) vers une position de destination (5) et/ou une position de dépôt (6) prédéterminée,
**caractérisé en ce que**
- une détermination d'un centre de gravité de la pièce (13) a lieu avant et/ou pendant la mise en contact de la pièce (1) et
- une sphère d'enveloppe (11) est calculée, cette sphère d'enveloppe (11) étant définie par le centre de gravité de la pièce (13) déterminé et un rayon (14) par rapport au point (15) le plus éloigné de la pièce (1) et
- de manière continue, au moins pendant le mouvement de la pièce (1), a lieu un calcul d'un éventuel point d'impact (18) de la pièce (1), éloignée spatialement de l'outil de maintien (16) et défini par une trajectoire (19) de la pièce (1) lors d'une perte de la pièce par l'outil de maintien (16) et
- en même temps que le calcul du point d'impact (18), un calcul dynamique et un contrôle d'une trajectoire (22) de l'outil de maintien (16) est effectué par une commande d'installation (3) de façon à ce que le point d'impact (18) éventuel de la pièce (1) lors d'une perte de la pièce se trouve à l'intérieur d'une zone à risques (8) de l'espace d'usinage (7).

2. Procédé selon la revendication 1, **caractérisé en ce que** la détermination du centre de gravité de la pièce (13) a lieu à l'aide de données prédéterminées de la pièce provenant de la commande de l'installation (3).

3. Procédé selon la revendication 1 ou 2, **caractérisé en ce qu'**au moins un élément de capteur (27), relié, de préférence de manière optique, avec la commande de l'installation (3), est utilisé pour la détection d'une géométrie de la pièce.

4. Procédé selon la revendication 3, **caractérisé en ce que** la géométrie de la pièce est intégrée dans le calcul de la trajectoire (22) de l'outil de maintien (16) de façon à ce qu'une position de contact (23) de l'outil de maintien (16) sur la pièce (1) par rapport au centre de gravité de la pièce (13) soit calculée par la commande de l'installation (3) de façon à ce que des couples de basculement (25), dus à l'inertie, de la pièce (1) par rapport à l'outil de maintien (16) soient minimisés pendant le mouvement, afin de maintenir, lors d'une perte de la pièce, l'éventuel point d'impact (18) à l'intérieur de la zone à risques (8).

5. Procédé selon l'une des revendications précédentes, **caractérisé en ce que** d'éventuels objets de collision fixes (26) dans l'espace d'usinage (7) sont pris en compte par la commande de l'installation et sont intégrés dans le calcul de l'éventuel point d'impact (18) et/ou de la trajectoire (22) de l'outil de maintien (16).

6. Procédé selon l'une des revendications précédentes, **caractérisé en ce que** d'éventuels objets de collision mobiles (26) dans l'espace d'usinage (7) sont détectés en continu par au moins un capteur d'environnement (28), de préférence à laser, et sont intégrés dans le calcul de l'éventuel point d'impact (18) et/ou de la trajectoire (22) de l'outil de maintien (16).

7. Procédé selon la revendication 6, **caractérisé en ce que** la vitesse et/ou la direction de déplacement d'un objet de collision mobile (26) est détectée et intégrée dans le calcul de l'éventuel point d'impact (18) et/ou de la trajectoire (22) de l'outil de maintien (16).

8. Procédé selon l'une des revendications précédentes, **caractérisé en ce qu'**au moins un capteur inertiel (38), disposé dans l'outil de maintien (16), est utilisé pour la mesure en continu de données de mouvement spatiales (29) de l'outil de maintien (16), celles-ci étant utilisées pour le calcul dynamique du point d'impact (18) et/ou de la trajectoire (22) de l'outil de maintien (16).

9. Procédé selon l'une des revendications précédentes, **caractérisé en ce que**, pour le calcul dynamique en continu de la trajectoire (22) de l'outil de maintien (16), au moins pendant des phases d'accélération et/ou de freinage une force résultante (32), constituée de la force de gravité (30) et d'une force d'inertie (31) de la pièce (1), résultant de l'accélération instantanée de la pièce dans l'espace, est déterminée et, à la trajectoire (22), est superposé un mouvement de compensation (33) sous la forme d'un mouvement de translation et/ou de rotation de l'outil de maintien (16) de façon à ce que la force résultante (32) de la pièce (1) agit perpendiculairement sur la surface de la pièce (12) en contact avec l'outil de maintien (16) et/ou en direction d'un centre de translation et/ou de rotation de l'outil de maintien (16).

10. Procédé selon la revendication 9, **caractérisé en ce que** le mouvement de compensation (33) a lieu à l'aide d'un mouvement de translation et/ou de rotation de l'outil de maintien (16) autour du centre de gravité de la pièce (13).

11. Procédé selon l'une des revendications précédentes, **caractérisé en ce que**, pour l'application unilatérale de la force de maintien (20) sur une surface de la pièce, au moins une ventouse (35) et/ou un préhenseur magnétique est utilisé ou, pour l'application d'une force de maintien (20) sur deux surfaces opposées de la pièce, un préhenseur à plaques ou un préhenseur à pince est utilisé.

12. Procédé selon la revendication 11, **caractérisé en ce que**, sur la surface de la pièce, sont utilisés au moins deux positions de contact partiel (24), (23), distantes entre elles d'une distance prédéterminée (34), pour l'application d'une force de maintien partielle (21) correspondante sur la surface de la pièce (12), au moyen d'au moins une ventouse (35) ou préhenseur magnétique comprenant un nombre correspondant de préhenseurs partiels (17), les forces de maintien partielles (21) étant appliquées de manière différente, de préférence de manière croissante, d'une manière prédéterminée, lors la distance entre les positions de contact partiel (24) respectives et le centre de gravité de la pièce (13) augmente.

13. Procédé selon l'une des revendications précédentes, **caractérisé en ce qu'**au moins un capteur de mouvement (36), relié avec la commande de l'installation (3), de préférence disposé sur l'outil de maintien (16) en direction de la surface de la pièce (12), est utilisé pour la détection d'un éventuel mouvement relatif de la pièce (1) par rapport à l'outil de maintien (16).

14. Procédé selon la revendication 13, **caractérisé en ce que**, lors d'une détection d'un mouvement relatif de la pièce (1) par rapport à l'outil de maintien (16), pour le déplacement d'un éventuel point d'impact (18) à l'intérieur de la zone à risques (8) :
- une augmentation de la force de maintien (20) et/ou
- une diminution de la vitesse de la trajectoire (22) de l'outil de maintien (16)
- et/ou une modification de la trajectoire (22) de l'outil de maintien (16) en direction d'une zone non dangereuse,
- et/ou une force résultante (32), constituée de la force de gravité (30) et d'une force d'inertie (31) de la pièce (1), constituée de l'accélération instantanée de la pièce (1) dans l'espace, est déterminée et un mouvement de compensation (33) de l'outil de maintien (16), se superposant à la force résultante (32), est pris en compte dans le calcul et le contrôle de la trajectoire (22) de l'outil de maintien (16) par la commande de l'installation (3).

15. Procédé selon l'une des revendications 13 ou 14, **caractérisé en ce que**, lors de la détection d'un mouvement relatif de la pièce (1) pendant le mouvement de l'outil de maintien (16), une détermination en continu d'une valeur de friction actuelle entre l'outil de maintien (16) et la pièce (1) a lieu grâce à la mesure de la force de maintien (20) et d'un déplacement relatif (37) de la pièce (1) et est mise à, la disposition de la commande de l'installation (3) sous la forme d'une valeur de mesure.
